# EUROPÄISCHE PATENTSCHRIFT

(11) **EP 2 723 813 B1**
(45) Veröffentlichungstag und Bekanntmachung des Hinweises auf die Patenterteilung: **12.08.2015**
(21) Anmeldenummer: 12730869.0
(22) Anmeldetag: 17.06.2012
(51) Int. Cl.: C08L 67/02, C08K 5/00, C08K 5/17

(54) **WITTERUNGSBESTÄNDIGE POLYESTERFORMMASSEN MIT STYROLCOPOLYMEREN**
WEATHER-RESISTANT POLYESTER MOULDING COMPOUNDS COMPRISING STYRENE COPOLYMERS
MATIÈRES À MOULER EN POLYESTER RÉSISTANTES AUX INTEMPÉRIES COMPRENANT DES COPOLYMÈRES DE STYRÈNE

(30) Priorität: 27.06.2011 EP 11171556
(43) Veröffentlichungstag der Anmeldung: 30.04.2014
(73) Patentinhaber: BASF SE, 67056 Ludwigshafen (DE)
(72) Erfinder: WEBER, Martin, 67487 Maikammer (DE); MINKWITZ, Rolf, 68167 Mannheim (DE); CHOI, Nok-young, 67061 Ludwigshafen (DE); EIBECK, Peter, 67346 Speyer (DE)
(86) Internationale Anmeldenummer: PCT/EP2012/061540
(87) Internationale Veröffentlichungsnummer: WO 2013/000747

(56) Entgegenhaltungen:
- WO-A1-2010/132535
- DE-A1- 10 316 198
- US-A1- 2004 180 997

## Beschreibung

Die Erfindung betrifft thermoplastische Formmassen, enthaltend
A) 2 bis 98,8 Gew.-% mindestens eines Polyesters.
B) 0 bis 49,9 Gew.-% eines kautschukfreien Copolymerisates, verschieden vor C
   und/oder G aus,
   b₁) 60 bis 95 Gew.-% Styrol oder substituierten Styrolen der allgemeinen Formel la oder
      deren Mischungen 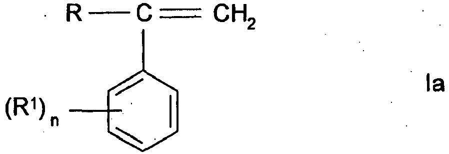 worin R einen Alkylrest mit 1 bis 8 C-Atomen oder ein Wasserstoffatom und R¹ einen Alkylrest mit 1 bis 8 C-Atomen darstellen und n den Wert 1, 2 öder 3 hat und
      b₂) 5 bis 40 Gew.-% mindestens eines ungesättigten Nitrils,
C) 1 bis 49,9 Gew.-% eines oder mehrerer schlagzähmodifizierter Pfropfkautschuke ohne olefinische Doppelbindung in der Kautschukphase und einem Quellungsindex von 6 bis 60 (in Toluol),
D) 0,1 bis 1 Gew.-% einer Verbindung der Formel (I) 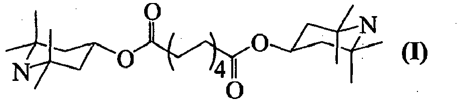
E) 0,1 bis 1 Gew.-% eines Gemisches von Verbindungen der Formel (II) 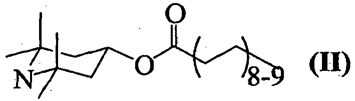
F) 0 bis 1 Gew.-% eines Gemisches von Verbindungen der Formel (III) 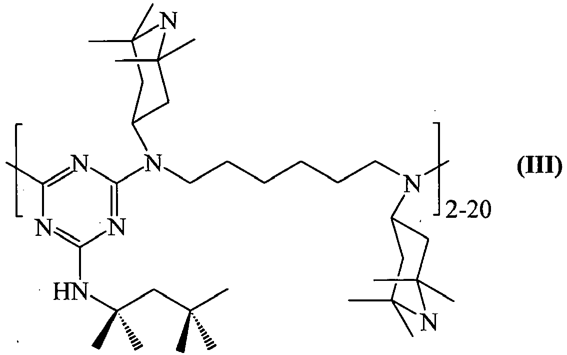 oder 0 bis 1 Gew.-% eines Gemisches von Verbindungen der Formel (IV) 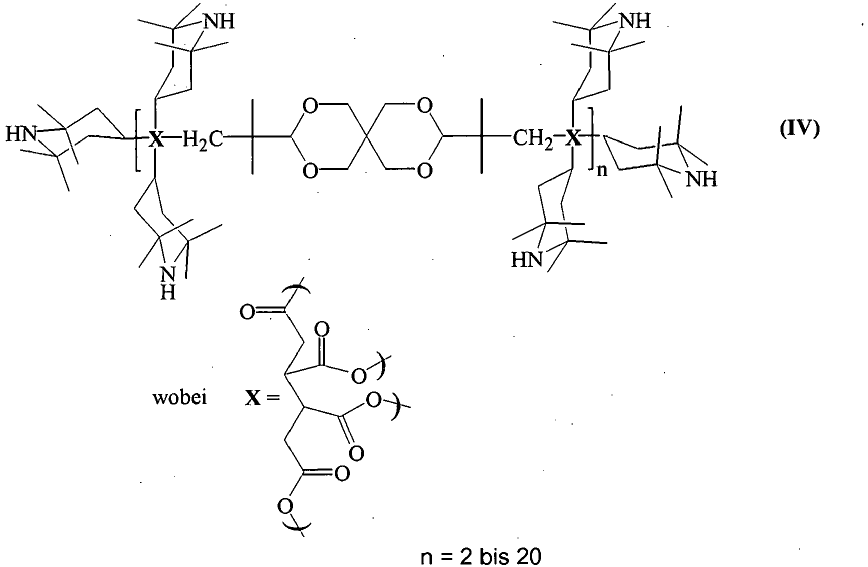 oder 0 bis 1 Gew.-% eines Gemisches von Verbindungen der Formel (V): 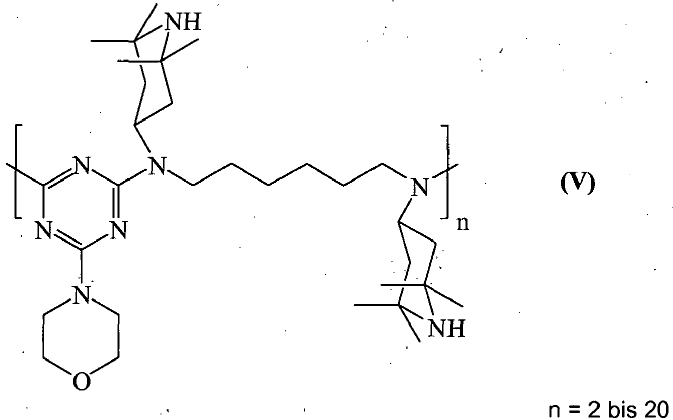 oder 0 bis 1 Gew.-% eines Gemisches von Verbindungen der Formel (VI) 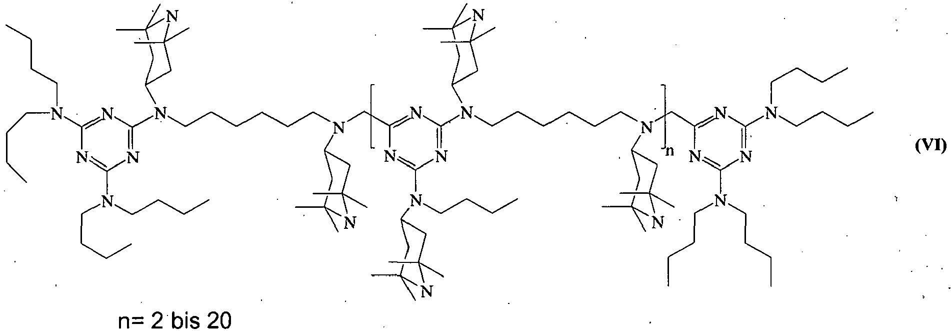 oder deren Mischungen,
G) 0 bis 30 Gew.-% eines Copolymeren aus
   g₁) 49,5 bis 99,5 Gew.-% sich von einem oder mehreren vinylaromatischen Monomeren ableitende Struktureinheiten,
   g₂) 0 bis 50 Gew.-% sich von einem oder mehreren Vinylcyaniden ableitende Struktureinheiten,
   g₃) 0,5 bis 40 Gew.-% sich von einem oder mehreren Dicarbonsäureanhydriden ableitende Struktureinheiten und
   g₄) 0 bis 25 Gew.-% sich von weiteren copolymerisierbaren Monomeren ableitende Struktureinheiten,
      wobei die Gew.-% der Komponente G jeweils auf das Gesamtgewicht der sich von den Komponenten g₁, g₂, g₃ und g₄ ableitenden Struktureinheiten bezogen sind und zusammen 100 Gew.% ergeben,
H) 0 bis 60 Gew.-% weiterer Zusatzstoffe,
wobei die Summe der Gewichtsprozente A) bis H) 100 % ergibt.

Weiterhin betrifft die Erfindung die Verwendung der thermoplastischen Formmassen zur Herstellung von Fasern, Folien und Formkörpern sowie Fasern, Folien und Formkörper, welche aus den erfindungsgemäßen thermoplastischen Formmassen erhältlich sind.

Polymermischungen finden in der Technik zunehmendes Interesse, da sie maßgeschneiderte Eigenschaftskombinationen bieten. Von besonderem Interesse sind dabei Polymermischungen aus unverträglichen Polymeren, die ungewöhnliche Eigenschaftskombinationen aufweisen. Polymermischungen auf Basis von Polyestern und Styrolcopolymeren sind seit Jahren bekannt (DE 33 36 499, US 4,485,212, EP 135 677). Aufgrund der Unverträglichkeit zwischen Polyestern und Styrolcopolymeren weisen diese Produkte jedoch ungenügende mechanische Eigenschaften auf.

In der Literatur werden daher verschiedene Ansätze diskutiert, die Verträglichkeit der Phasen zu verbessern, wobei vor allem funktionalisierte Styrolcopolymere (EP 284 086, US 4,902,749, US 5,310,793, Lee P.-C., Kuo W.-F., Chang F.-C., Polymer 1994, 35, 5641, ) und reaktive Acrylatcopolymere (EP 573 680, US 4,352,904, Hage E., Hale W., Keskkula H., Paul D.R. Polymer,1997, 38, 3237) verwendet werden.

Um insbesondere den steigenden Anforderungen der Automobilindustrie nach witterungsstabilen Produkten gerecht zu werden, sind bereits stabilisierte Formmassen auf Basis von Polyestern und acrylesterhaltigen Formmassen bekannt. So beschreibt z.B. die EP 708800 die Stabilisierung von Formmassen die u.a. aus PBT und ASA bestehen können mit einer Kombination aus sterisch gehindertem Phenol und Metalloxiden. Gegenstand der EP 1363883 sind alkoxyverbrückte, sterisch gehinderte Aminstabilisatoren für Formmassen, welche auch Polyester und Styrolcopolymere enthalten können. Die DE 103 16 198 A1 beschreibt bestimmte Stabilisatorgemische zur Stabilisierung von organischen Materialien.

Mit den bisher bekannten Stabilisatorsystemen können die Anforderungen der Automobilindustrie nach witterungsstabilen Formmassen nicht vollständig erfüllt werden.

Aufgabe der vorliegenden Erfindung war es daher, Blends aus Polyester mit Kautschuken und gegebenenfalls SAN zur Verfügung zu stellen, welche gute Dauergebrauchsbeständigkeit und eine hohe Verarbeitungsstabilität besonders bei hohen Mischungstemperaturen aufweisen. Insbesondere soll die Witterungsstabilität verbessert werden.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 2 bis 98,8, bevorzugt 20 bis 97 und insbesondere 40 bis 85 Gew.-% mindestens eines thermoplastischen Polyesters.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 ml/g (gemessen in einer 0,5 gew.-%igen Lösung in einem Phenol/o-Dichlorbenzolgemisch (Gew.-Verh. 1:1 bei 25°C)) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 1,0 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im Allgemeinen:
1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte. Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 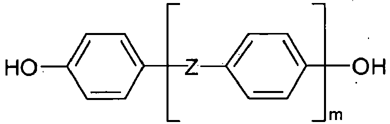 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seien beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
Di-(hydroxyphenyl)sulfoxid,
α,α'-Di-(hydroxyphenyl)-dialkylbenzol,
Di-(hydroxyphenyl)sulfon, Di-(hydroxybenzoyl)benzol

Resorcin und Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US A 3651014, beschrieben. Auch im Handel sind entsprechende Produkte erhältlich, z.B. Hytrel® (DuPont).

Als Komponente B) können erfindungsgemäß 0 bis 49,9, bevorzugt 1 bis 49,9, insbesondere 2 bis 20 und ganz besonders bevorzugt 2 bis 15 Gew.-% mindestens eines kautschukfreien Copolymerisates, verschieden von C und/oder G aus
b₁) 60 bis 95, vorzugsweise 70 bis 85 Gew.-% Styrol oder substituierten Styrolen der allgemeinen Formel Ia oder deren Mischungen 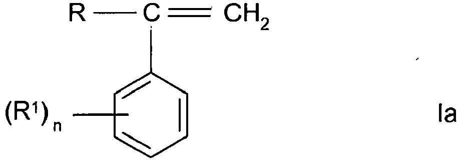 worin R einen Alkylrest mit 1 bis 8 C-Atomen oder ein Wasserstoffatom und R¹ einen Alkylrest mit 1 bis 8 C-Atomen darstellen und n den Wert 1, 2 oder 3 hat und
b₂) 5 bis 40, vorzugsweise 15 bis 30 Gew.-% mindestens eines ungesättigten Nitrils.

Bevorzugte Reste R sind Methyl, Ethyl oder Wasserstoff und

Bevorzugte Reste R¹ sind Methyl, Ethyl oder Wasserstoff.

Bevorzugte Komponenten b₁) sind Styrol oder α-Methylstyrol oder deren Mischungen. Bevorzugte Komponenten b₂) sind Acrylnitril oder Methacrylnitril oder deren Mischungen.

Die Copolymerisate B) sind harzartig, thermoplastisch und kautschukfrei.

Bevorzugte Komponenten B) sind aufgebaut aus b₁) 50 bis 90 Gew.-%, bevorzugt 60 bis 85 Gew.-%, insbesondere 70 bis 83 Gew.-%, Styrol und b₂) 10 bis 50 Gew.%, bevorzugt 15 bis 40 Gew.-%, insbesondere 17 bis 30 Gew.-%, Acrylnitril sowie b₃) 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente B und zusammen 100 Gew.-% ergeben.

Weiterhin bevorzugte Komponenten B) sind aufgebaut aus b₁) 50 bis 90 Gew.-%, bevorzugt 60 bis 80 Gew.%, insbesondere 65 bis 78 Gew.-%, α-Methylstyrol und b₂) 10 bis 50 Gew.-%, bevorzugt 20 bis 40 Gew.-%, insbesondere 22 bis 35 Gew.-%, Acrylnitril sowie b₃) 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente B) und zusammen 100 Gew.-% ergeben.

Ebenfalls bevorzugte Komponenten B) sind Mischungen dieser Styrol-Acrylnitril-Copolymere, oder α-Methylstyrol-Acrylnitril-Copolymere mit N-Phenylmaleinimid-Styrol-Acrylnitril-Terpolymeren.

Als oben genannte weitere Monomere sind alle copolymerisierbaren Monomere einsetzbar wie beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen.

Die Copolymerisate B) sind an sich bekannt und lassen sich durch radikalische Polymerisation, insbesondere durch Emulsions-, Suspensions-, Lösungs- und Massepolymerisation herstellen. Sie weisen Viskositätszahlen im Bereich von 40 bis 160 ml/g auf, dies entspricht mittleren Molekulargewichten Mw (Gewichtsmittelwert) von 40 000 bis 2 000 000 g/mol.

Als Komponente C) können die erfindungsgemäßen Formmassen 1 bis 49,9, bevorzugt 1 bis 40 und insbesondere 5 bis 20 Gew.-% eines oder mehrerer schlagzähmodifizierter Pfropfkautschuke ohne olefinische Doppelbindung in der Kautschukphase mit einem Quellungsindex von 6 bis 60 (in Toluol).

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methylethylketon oder Toluol. Der QI des Pfropfcopolymerisates C liegt in den erfindungsgemäßen Formmassen im Bereich QI = 6 bis 60 in Toluol. Bevorzugt wird ein QI von 6 bis 18, besonders bevorzugt von 7 bis 15 in Toluol.

Die Bestimmung des QI erfolgt gemäß:

Zur Bestimmung des Quellungsindex wird eine wässrige Dispersion des Pfropfcopolymerisates C auf einem Blech bei 80°C unter leichtem Vakuum (600 bis 800 mbar) und Stickstoffatmosphäre über Nacht getrocknet. Von dem ca. 2 mm dicken übrigbleibenden Film wird anschließend eine 1 cm² große Scheibe abgeschnitten und in 50 ml Toluol in einem Penicillinglas über Nacht gequollen. Das überstehende Toluol wird abgesaugt, der gequollene Film gewogen und über Nacht bei 80°C getrocknet. Das Gewicht des getrockneten Films wird bestimmt. Der Quellungsindex ergibt sich aus dem Quotienten der Gewichte des gequollenen Gels und des getrockneten Gels.

In einer bevorzugten Ausführungsform ist das kautschukelastische Pfropfcopolymerisat C aufgebaut aus
- C₁: 1 bis 99 Gew.-%, vorzugsweise 55 bis 80 Gew.-%, insbesondere 55 bis 65 Gew.-%, einer teilchenförmigen Pfropfgrundlage C₁ mit einer Glasübergangstemperatur unterhalb von 0°C, und
- C₂: 1 bis 99 Gew.-%, vorzugsweise 20 bis 45 Gew.-%, insbesondere 35 bis 45 Gew.-%, einer Pfropfauflage C₂ mit einer Glasübergangstemperatur oberhalb von 30°C
bezogen auf C.

Komponente C₁ ist dabei aufgebaut aus
- C₁₁: 60 bis 99,9 Gew.-%, vorzugsweise 80 bis 99,9 Gew.-%, mindestens eines C₁-C₈₋ Alkylesters der Acrylsäure, vorzugsweise C₄ bis C₈-Alkylacrylaten, insbesondere n-Butylacrylat und/oder 2-Ethylhexylacrylat,
- C₁₂: 0,1 bis 20 Gew.-%, vorzugsweise 0,1 bis 5 Gew.%, mindestens eines polyfunktionellen vernetzenden Monomeren, vorzugsweise Butylendiacrylat, Divinylbenzol, Butaindioldimethacrylat, Trimethylolpropantri(meth)acrylat, Diallylmethacrylat, Diallylmaleat, Diallylfumarat, Triallylmethacrylat, Triallylisocyanurat, besonders bevorzugt Diallylphthalat, Allylmethacrylat und/oder Dihydrodicyclopentadienylacrylat (DCPA) und
- C₁₃: 0 bis 39,9 Gew.-%, vorzugsweise 0 bis 19,9 Gew.-% harte Polymere bildenden Monomeren, wie Vinylacetat, (Meth)acrylnitril, Styrol, substituiertes Styrol, Methylmethacrylat oder Vinylether.

Komponente C₂ ist dabei aufgebaut aus
- C₂₁: 40 bis 100 Gew.-%, vorzugsweise 65 bis 85 Gew.-% eines vinylaromatischen Monomeren, insbesondere des Styrols, α-Methylstyrols oder N-Phenylmaleinimids und
- C₂₂: 0 bis 60 Gew.-%, vorzugsweise 15 bis 35 Gew.-% eines polaren, copolymerisierbaren, ethylenisch ungesättigten Monomeren, insbesonders des Acrylnitrils, (Meth)acrylsäureesters oder Methacrylnitrils oder deren Mischungen.

Bei der Komponente C handelt es sich um ein Pfropfcopolymerisat umfassend eine Pfropfgrundlage C₁ und mindestens eine Pfropfauflage C₂. Das Pfropfcopolymerisat C kann einen mehr oder weniger perfekt ausgeprägten Kern-Schale-Aufbau aufweisen (Pfropfgrundlage C₁ stellt den Kern dar, die Pfropfauflage C₂ die Schale), es ist aber auch möglich, dass die Pfropfauflage C₂ die Pfropfgrundlage C₁ nur unvollständig umschließt bzw. bedeckt oder aber auch die Pfropfauflage C₂ die Pfropfgrundlage C₁ ganz oder teilweise durchdringt.

Die Pfropfgrundlage C₁ kann in einer Ausführungsform der Erfindung einen sogenannten Kern enthalten, der aus einem weichen kautschukelastischen Polymerisat oder einem harten Polymerisat gebildet werden kann; in den Ausführungsformen, in denen die Pfropfgrundlage C₁ einen Kern enthält, wird der Kern bevorzugt aus einem harten Polymerisat, insbesondere Polystyrol oder einem Styrolcopolymer, gebildet. Solche Pfropfkerne und deren Herstellung sind dem Fachmann bekannt und beispielsweise in EP-A 535456 und EP-A 534212 beschrieben. Selbstverständlich ist es auch möglich, zwei oder mehr Pfropfgrundlagen C₁ einzusetzen, die sich beispielsweise in ihrer Zusammensetzung oder in der Teilchengröße voneinander unterscheiden. Solche Mischungen unterschiedlicher Pfropfgrundlagen können nach dem Fachmann an sich bekannten Methoden hergestellt werden, beispielsweise indem zwei oder mehr Kautschuklatices separat hergestellt und die entsprechenden Dispersionen vermischt werden, aus den entsprechenden Dispersionen separat die Feucht-Kautschuke gefällt und beispielsweise in einem Extruder gemischt werden oder die entsprechenden Dispersionen separat vollständig aufgearbeitet und die erhaltenen Pfropfgrundlagen anschließend vermischt werden.

Das Pfropfcopolymerisat C kann zwischen der Pfropfgrundlage C₁ und der Pfropfauflage C₂ ein oder mehrere weitere Pfropfauflagen bzw. -hüllen oder -schalen aufweisen -beispielsweise mit anderen Monomerzusammensetzungen-, bevorzugt weist das Pfropfcopolymer C aber außer der Pfropfauflage C₂ keine weiteren Pfropfauflagen bzw. -hüllen oder -schalen auf.

Das Polymerisat der Pfropfgrundlage C₁ hat üblicherweise eine Glasübergangstemperatur unter 0°, vorzugsweise eine Glasübergangstemperatur unter (-20)°C, insbesondere unter (-30)°C. Ein Polymerisat aus den die Pfropfauflage C₂ bildenden Monomeren besitzt üblicherweise eine Glasübergangstemperatur von mehr als 30°C, insbesondere mehr als 50°C (jeweils ermittelt nach DIN 53765).

Die Pfropfcopolymerisate C haben üblicherweise eine mittlere Teilchengröße d₅₀ von 50 bis 1200 nm, bevorzugt 50 bis 800 nm, besonders bevorzugt 50 bis 600 nm. Diese Teilchengrößen können erzielt werden, wenn man als Pfropfgrundlage C₁ mittlere Teilchengrößen d₅₀ von 50 bis 1000 nm, bevorzugt 50 bis 700 nm besonders bevorzugt 50 bis 500 nm verwendet. Gemäß einer Ausführungsform der Erfindung ist die Teilchengrößenverteilung monomodal. Gemäß einer weiteren erfindungsgemäßen Ausführungsform ist die Teilchengrößenverteilung der Komponente C bimodal, wobei 60 bis 90 Gew.-% eine mittlere Teilchengröße von 50 bis 200 nm und 10 bis 40 Gew.-% eine mittlere Teilchengröße von 200 bis 800 nm aufweisen, bezogen auf das Gesamtgewicht der Komponente C. Als mittlere Teilchengröße bzw. Teilchengrößenverteilung werden die aus der integralen Massenverteilung bestimmten Größen angegeben. Bei diesen und den weiteren im Rahmen der vorliegenden Erfindung genannten mittleren Teilchengrößen handelt es sich in allen Fällen um das Gewichtsmittel der Teilchengrößen, wie sie mittels HDC gemessen wurden (W. Wohlleben and H. Schuch in Measurement of Particle Size Distribution of Polymer Latexes, 2010, Editors: Luis M. Gugliotta and Jorge R. Vega, p. 130 -153).

Die Pfropfcopolymerisate C können durch Pfropfpolymerisation der Komponenten C₂₁ und C₂₂ auf mindestens eine der vorstehend aufgeführten Pfropfgrundlagen C₁ hergestellt werden. Geeignete Herstellverfahren für Pfropfcopolymerisate C sind die Emulsions-, Lösungs-, Masse- oder Suspensionspolymerisation. Bevorzugt werden die Pfropfcopolymerisate C durch radikalische Emulsionspolymerisation hergestellt in Gegenwart von Latices der Komponente C₁ bei Temperaturen von 20 bis 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C. Geeignete Polymerisationsverfahren sind beschrieben in WO-A-02/10222, DE-A-28 26 925, DE-A-31 49 358 und DE-C 12 60 135. Der Aufbau der Pfropfauflagen erfolgt vorzugsweise im Emulsionspolymerisationsverfahren, wie es beschrieben ist in DE-A- 32 27 555, DE-A-31 49 357, DE-A-31 49 358, DE-A-34 14 118. Das definierte Einstellen der mittleren Teilchengrößen von 50 bis 1200 nm erfolgt bevorzugt nach den Verfahren, die beschrieben sind in der DE-C-12 60 135 und DE-A 28 26 925, bzw. Applied Polymer Science, Band 9 (1965), Seite 2929. Das Verwenden von Polymerisaten mit unterschiedlichen Teilchengrößen ist beispielsweise bekannt aus DE-A-28 26 925 und US-A-5 196 480. Gemäß dem in der DE-B-12 60 135 beschriebenen Verfahren wird zunächst die Pfropfgrundlage C₁ hergestellt, indem der oder die gemäß einer Ausführungsform der Erfindung verwendeten Acrylsäureester C₁₁ und die als Vernetzungs- und/oder Pfropfagenz wirkende Verbindung C₁₂, ggf. zusammen mit den weiteren monoethylenisch ungesättigten Monomeren C₁₃, in wäßriger Emulsion in an sich bekannter Weise bei Temperaturen zwischen 20 und 100°C, vorzugsweise zwischen 50 und 90°C, polymerisiert werden. Es können die üblichen Emulgatoren, wie beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 0,7 bis 2 Gew.-%, bezogen auf die bei der Herstellung der Pfropfgrundlage C₁ eingesetzten Monomeren, eingesetzt. Im allgemeinen wird bei einem Gewichtsverhältnis von Wasser zu Monomeren von 4 : 1 bis 0,6 : 1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im allgemeinen in Mengen von 0,1 bis 1 Gew.-%, bezogen auf die bei der Herstellung der Pfropfgrundlage C₁ eingesetzten Monomeren, eingesetzt. Als weitere Polymerisationshilfsstoffe können die üblichen Puffersubstanzen, durch welche pH-Werte von vorzugsweise 6 bis 9 eingestellt werden, wie Natriumbicarbonat und Natriumpyrophosphat, sowie 0 bis 3 Gew.-% eines Molekulargewichtsreglers, wie Mercaptane, Terpinole oder dimeres α-Methylstyrol, bei der Polymerisation verwendet werden. Die genauen Polymerisationsbedingungen, insbesondere Art, Dosierung und Menge des Emulgators, werden innerhalb der oben angegebenen Bereiche im einzelnen so bestimmt, dass der erhaltene Latex des vernetzten Acrylsäureesterpolymerisats C₁ einen d₅₀-Wert im Bereich von 50 bis 1000 nm, vorzugsweise 50 bis 700 nm, besonders bevorzugt 50 bis 500 nm, besitzt. Die Teilchengrößenverteilung des Latex soll dabei vorzugsweise eng mit einem Polydispersitätsindex < 0.75 sein, entsprechend W. Mächtle and L. Börger, Analytical Ultracentrifugation of Polymers and Nanoparticles, (Springer, Berlin, 2006). ISBN 3-540-23432-2.

Zur Herstellung des Pfropfpolymerisats C kann in einem nächsten Schritt in Gegenwart des so erhaltenen Latex des vernetzten Acrylsäureester-Polymerisats C₁ gemäß einer Ausführungsform der Erfindung ein Monomerengemisch aus Komponente C₂₁, bevorzugt Styrol, Komponente C₂₂, bevorzugt Acrylnitril und/oder eines (Meth)acrylsäureesters, und ggf. weiterer ungesättigter Monomere polymerisiert werden. Dabei können die Monomeren C₂₁, C₂₂ und ggf. weitere ungesättigte Monomere einzeln oder in Mischung miteinander zugefügt werden. Beispielsweise kann man zunächst Styrol alleine, und danach eine Mischung aus Styrol und Acrylnitril pfropfen. Es ist vorteilhaft, diese Pfropfcopolymerisation auf das als Pfropfgrundlage dienende vernetzte Acrylsäureesterpolymerisat wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage C₁, wobei, falls notwendig, weiterer Emulgator und Initiator zugegeben werden kann. Das gemäß einer Ausführungsform der Erfindung aufzupfropfende Monomerengemisch kann dem Reaktionsgemisch auf einmal, absatzweise in mehreren Stufen -beispielsweise zum Aufbau mehrerer Pfropfauflagen- oder vorzugsweise kontinuierlich während der Polymerisation zugegeben werden. Die Pfropfcopolymerisation des Gemisches der Komponenten C₂₁, C₂₂ und ggf. weiterer Monomerer in Gegenwart des vernetzenden Acrylsäureesterpolymerisats C₁ wird so geführt, dass ein Pfropfgrad von 10 bis 70 Gew.-%, vorzugsweise 20 bis 60 Gew.-%, insbesondere 30 bis 55 Gew.-%, bezogen auf das Gesamtgewicht der Komponente C, im Pfropfcopolymerisat C resultiert. Da die Pfropfausbeute bei der Pfropfcopolymerisation nicht 100% beträgt, sollte vorteilhafter Weise eine etwas größere Menge des Monomerengemisches aus C₂₁, C₂₂ und ggf. weiterer Monomerer bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats C ist dem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329 bis 333). Bei der Emulsions-Pfropfcopolymerisation entstehen im allgemeinen 5 bis 15 Gew.-%, bezogen auf das Pfropfcopolymerisat, an freiem, ungepfropftem Copolymerisat der Komponenten C₂₁, C₂₂ und ggf. der weiteren Monomere. Der Anteil des Pfropfcopolymerisats C in dem bei der Pfropfcopolymerisation erhaltenen Polymerisationsprodukt kann beispielsweise nach der in US-A-2004/0006178 beschriebenen Methode ermittelt werden.

In weiteren Ausführungsformen der erfindungsgemäßen Verfahren kann die Herstellung der Pfropfgrundlage C₁ in Gegenwart von Saatpartikeln erfolgen und/oder es kann nach der Herstellung der Pfropfgrundlage C₁ und vor dem Aufbringen der Pfropfauflage C₂ ein Agglomerationsschritt durchgeführt werden. Diese beiden Verfahrensoptionen sind dem Fachmann bekannt und/oder in der Literatur beschrieben, und werden beispielsweise gewählt, um Teilchengrößen und Teilchengrößenverteilungen gezielt einzustellen.

Saatpartikel haben in der Regel eine Teilchengröße d₅₀ von 10 bis 200 nm, bevorzugt 10 bis 180 nm, besonders bevorzugt 10 bis 160 nm. Es wird bevorzugt, Saatpartikel einzusetzen, die eine geringe Breite der Teilchengrößenverteilung haben. Darunter sind Saatpartikel besonders bevorzugt, die eine monomodale Teilchengrößenverteilung haben. Die Saatpartikel können grundsätzlich aus kautschukelastische Polymere bildenden Monomeren, beispielsweise 1,4-Butadien oder Acrylaten, aufgebaut sein, oder aus einem Polymeren, dessen Glasübergangstemperatur mehr als 0°C, bevorzugt mehr als 25°C beträgt, aufgebaut sein. Zu den bevorzugten Monomeren, auf denen diese Saatpartikel basieren, zählen vinylaromatische Monomere wie Styrol, ringsubstiuierte Styrole oder α-Methylstyrol, darunter bevorzugt Styrol, Acrylnitril, Alkylacrylsäure, Alkylacrylate, darunter bevorzugt n-Butylacrylat. Es kommen auch Mischungen aus zwei oder mehr, bevorzugt zwei der genanten Monomeren in Betracht. Ganz besonders bevorzugt sind Saatpartikel aus Polystyrol oder n-Butylacrylat. Die Herstellung derartiger Saatpartikel ist dem Fachmann bekannt oder kann nach an sich bekannten Methoden erfolgen. Bevorzugt werden die Saatpartikel durch partikelbildende heterogene Polymerisationsverfahren, bevorzugt durch Emulsionspolymerisation, erhalten. Die Saatpartikel werden erfindungsgemäß vorgelegt, wobei es möglich ist, die Saatpartikel zunächst separat herzustellen, aufzuarbeiten und dann einzusetzen. Es ist aber auch möglich, die Saatpartikel herzustellen und ihnen danach ohne vorherige Aufarbeitung die Monomermischung aus C₁₁, C₁₂ und ggf. C₁₃ zuzufügen.

Verfahren zur teilweisen oder vollständigen Agglomerisation der Pfropfgrundlage C₁ sind dem Fachmann bekannt oder die Agglomerisation kann nach dem Fachmann an sich bekannten Methoden vorgenommen werden (siehe z.B. Keppler et al. Angew. Markomol. Chemie, 2, 1968 Nr. 20, Seite 1 bis 25). Die Agglomerisationsmethode ist im Prinzip nicht beschränkt. So können physikalische Verfahren wie Gefrier- oder Druckagglomerisationsverfahren verwendet werden. Es können aber auch chemische Methoden eingesetzt werden, um die Pfropfgrundlage zu agglomerisieren. Zu letzteren zählen die Zugabe von Elektroyten oder von anorganischen oder organischen Säuren. Bevorzugt wird die Agglomerisation mittels eines Agglomerisationspolymerisates vorgenommen. Als solche sind beispielsweise Polyethylenoxidpolymere, Polyvinylether oder Polyvinylalkohole zu nennen. Zu den geeigneten Agglomerisationspolymerisaten zählen des weiteren Copolymerisate die C₁- bis C₁₂- Alkylacrylate oder C₁- bis C₁₂- Methalkylacrylate und polare Comonomere wie Acrylamid, Methacrylamid, Ethylacrylamid, n-Butylacrylamid, Maleinsäureamid oder (Meth)acrylsäure enthalten. Neben diesen Monomeren, können diese Copolymerisate aus weiteren Monomeren, darunter Dienen wie Butadien oder Isopren aufgebaut sein. Die Agglomerisationspolymerisate können einen mehrstufigen Aufbau aufweisen und z.B: einen Kern/Schale-Aufbau haben. Als Kern kommen z.B. Polyacrylate wie Polyethylacrylat und als Schale kommen Teilchen auf (Meth)alkylacrylaten und den genannten polaren Comonomeren in Betracht. Besonders bevorzugtes Agglomerisationspolymerisat ist ein Copolymerisat aus 92 bis 99 Gew.-% Ethylacrylat oder -methacrylat und 1 bis 8 Gew.-% (Meth)acrylamid und/oder (Meth)acrylsäuren. Die Agglomerisationspolymerisate werden in der Regel in Form einer Dispersion eingesetzt. Bei der Agglomeration werden in der Regel von 0,1 bis 5, vorzugsweise von 0,5 bis 3 Gew.-Teile der Agglomerisationspolymerisate auf 100 Gew.-Teile der Pfropfgrundlage eingesetzt.

Die erfindungsgemäßen Pfropfcopolymerisate C können so weiterverwendet werden, wie sie in der Reaktionsmischung anfallen, beispielsweise als Latexemulsion oder -dispersion. Alternativ und wie es für die meisten Anwendungen bevorzugt ist, können sie aber auch in einem weiteren Schritt aufgearbeitet werden. Maßnahmen zur Aufarbeitung sind dem Fachmann bekannt. Dazu zählt z.B., dass die Pfropfcopolymerisate C aus der Reaktionsmischung isoliert werden, z.B. durch Sprühtrocknung, Scherung oder durch Fällen mit starken Säuren oder mittels Nukleierungsmitteln wie anorganischen Verbindungen z.B. Magnesiumsulfat. Die in der Reaktionsmischung vorliegenden Pfropfcopolymerisate C können aber auch dadurch aufgearbeitet werden, dass sie ganz oder teilweise entwässert werden. Ebenso ist es möglich, die Aufarbeitung mittels einer Kombination der genannten Maßnahmen vorzunehmen.

Das Mischen der Komponenten kann nach jeder beliebigen Weise nach allen bekannten Methoden erfolgen. Wenn diese Komponenten beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen dieser Komponenten durch gemeinsames Extrudieren, Kneten oder Verwalzen der Komponenten, wobei die Komponenten, sofern erforderlich, zuvor aus der bei der Polymerisation erhaltenen Lösung oder wässrigen Dispersion isoliert worden sind. Die in wässriger Dispersion erhaltenen Produkte C der Pfropfcopolymerisation können auch nur teilweise entwässert werden und als feuchte Krümel mit der Hartmatrix vermischt werden, wobei dann während des Vermischens die vollständige Trocknung der Pfropfcopolymerisate C) erfolgt.

Bevorzugtes Pfropfpolymerisat C) ist aufgebaut aus
- C₁): 40 bis 80 Gew.-% einer Pfropfgrundlage aus einem kautschukelastischen Polymeren auf Basis von Alkylacrylaten mit 1 bis 8 C-Atomen im Alkylrest und mit einer Glasübergangstemperatur von unter 0°C,
- C₂): 20 bis 60 Gew.-% einer Pfropfauflage aus
- C₂₁): 60 bis 85 Gew.-% Styrol oder substituierten Styrolen der allgmeinen Formel la oder deren Mischungen,
- C₂₂): 15 bis 35 Gew.-% mindestens eines ungesättigten Nitrils.

Als Komponente D) der erfindungsgemäßen Formmassen wird eine Verbindung der Formel (I) eingesetzt:

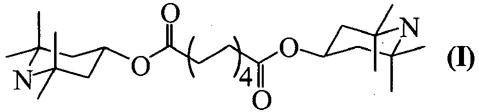

Diese wird in Mengen von 0,1 bis 1, vorzugsweise von 0,2 bis 0,9 und insbesondere von 0,2 bis 0,7 Gew.-% eingesetzt.

Dieses sterisch gehinderte Amin (CAS Nummer 52829-07-9) und seine Herstellung sind dem Fachmann bekannt und in der Literatur beschrieben (s. beispielsweise US-A-4 396 769 und den darin zitierten Literaturstellen). Im Handel ist es von BASF SE unter der Bezeichnung Tinuvin® 770 erhältlich.

Als Komponente E) der erfindungsgemäßen Formmassen wird ein Gemisch der Verbindungen der Formel (II) eingesetzt: 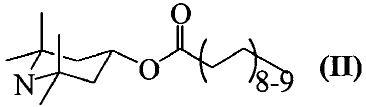 in Mengen von 0,1 bis 1, vorzugsweise von 0,2 bis 0,9 und insbesondere von 0,2 bis 0,7 Gew.-%, bezogen auf A bis H.

Diese sterisch gehinderten Amine (CAS Nummer 167078-06-0) und deren Herstellung sind dem Fachmann bekannt und in der Literatur beschrieben (Carlsson et al., Journal of Polymer Science; Polymer Chemistry Edition (1982), 20(2), 575-82). Vertrieben wird es von Cytec Industries unter der Bezeichnung Cyasorb® 3853

Als Komponente F) der erfindungsgemäßen Formmassen können einzeln oder Mischungen der Verbindungen der Formel (III) bis (VI) eingesetzt werden in Mengen von 0 bis 1, vorzugsweise 0,1 bis 0,5 und insbesondere 0,1 bis 0,3 Gew.-% .

Verbindungen der Formel III ist ein Gemisch mit n = 2 bis 20:

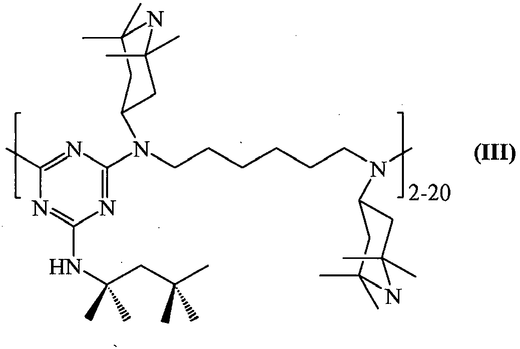

Dieses sterisch gehinderte Amin (CAS Nummer 71878-19-8) und seine Herstellung sind dem Fachmann bekannt und in der Literatur beschrieben (s. beispielsweise EP-A-93 693 und den darin zitierten Literaturstellen). Vertrieben wird es von BASF SE unter der Bezeichnung Chimassorb® 944:

Als weitere Komponente F der erfindungsgemäßen Formmassen kann ein Gemisch der Verbindungen der Formel (IV) eingesetzt werden:

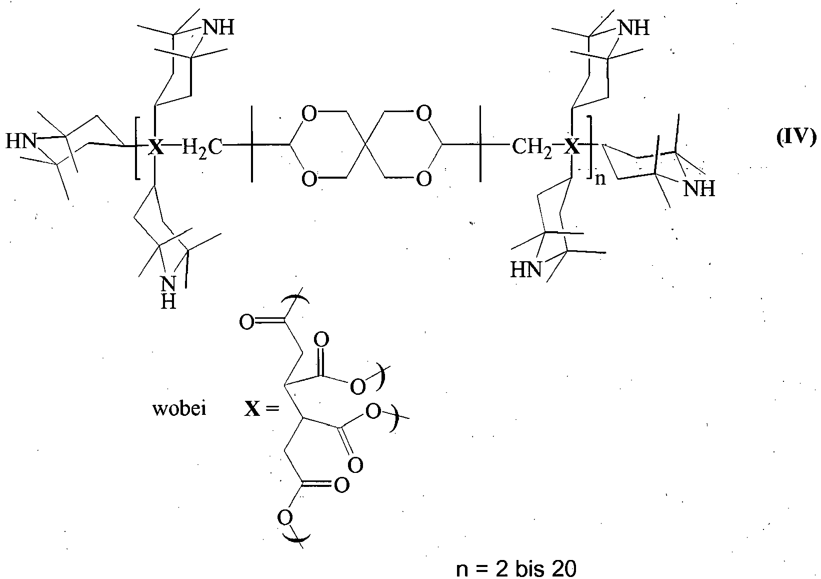

Dieses sterisch gehinderte Amin (CAS Nummer 101357-37-3) und seine Herstellung sind dem Fachmann bekannt und in der Literatur beschrieben (s. beispielsweise US-A-5 208 132 und den darin zitierten Literaturstellen). Vertrieben wird es von ADEKA unter der Bezeichnung Adeka Stab® LA-68.

Als weitere Komponente F) der erfindungsgemäßen Formmassen kann ein Gemisch der Verbindungen der Formel (V) eingesetzt werden:

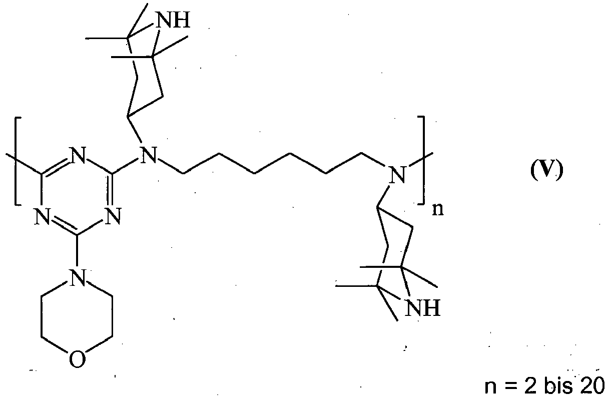

Dieses sterisch gehinderte Amin (CAS Nummer 82451-48-7) und seine Herstellung sind dem Fachmann bekannt und in der Literatur beschrieben (s. beispielsweise US-A-4 331 586 und den darin zitierten Literaturstellen). Vertrieben wird es von der Cytec Industries unter der Bezeichnung Cyasorb® UV-3346.

Als weitere Komponente F) der erfindungsgemäßen Formmassen kann ein Gemisch der Verbindungen der Formel (VI) eingesetzt werden:

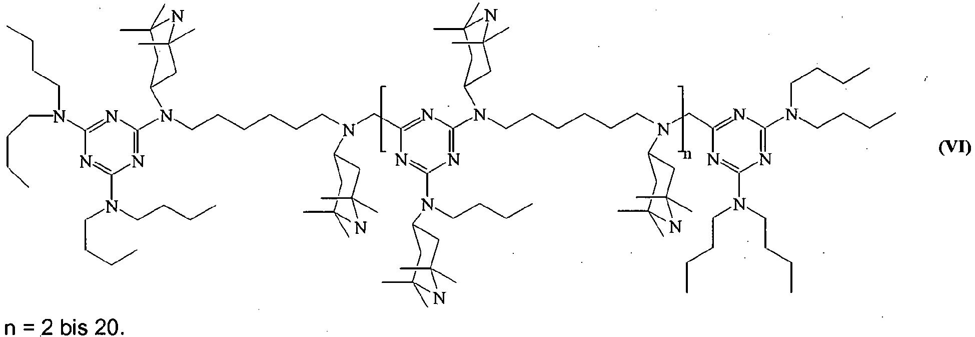

Dieses sterisch gehinderte Amin (CAS Nummer 192268-64-7) und seine Herstellung sind dem Fachmann bekannt und in der Literatur beschrieben (s. beispielsweise EP-A-782 994 und den darin zitierten Literaturstellen). Vertrieben wird es von BASF SE unter der Bezeichnung Chimassorb® 2020.

Als Komponente G) können die erfindungsgemäßen Formmassen 0 bis 30, vorzugsweise 0,5 bis 20 und insbesondere 1 bis 10 Gew.-% (bezogen auf A bis H) eines Copolymeren aus
- g₁): 49,5 bis 99,5 Gew.-%, bevorzugt 49,5 bis 93,5 Gew.-% sich von einem oder mehreren vinylaromatischen Monomeren ableitende Struktureinheiten,
- g₂): 0 bis 50 Gew.-%, bevorzugt 6 bis 50 Gew.-% sich von einem oder mehreren Vinylcyaniden ableitende Struktureinheiten,
- g₃): 0,5 bis 40 Gew.-%, bevorzugt 0,5 bis 2,4 Gew.-% sich von einem oder mehreren Dicarbonsäureanhydriden ableitende Struktureinheiten und
- g₄): 0 bis 25 Gew.-% sich von weiteren copolymerisierbaren Monomeren ableitende Struktureinheiten,
wobei die Gew.-% jeweils auf das Gesamtgewicht der sich von den Komponenten g₁), g₂), g₃) und g₄) ableitenden Struktureinheiten bezogen sind und zusammen 100 Gew.-% ergeben.

Bevorzugte Komponenten G) enthalten
- g₁): 49,2 bis 93,2 Gew.-%
- g₂): 6 bis 50 Gew.-%
- g₃): 0,8 bis 2,2 Gew.-%
- g₄): 0 bis 25 Gew.-%.

Als Komponente g₁) kommen alle dem Fachmann bekannten und im Stand der Technik, beispielsweise DE 100 58 302 A1, beschriebenen vinylaromatischen Monomere in Betracht; bevorzugt werden Styrol, α-Methylstyrol, p-Methylstyrol, t-Butylstyrol, Vinylnaphthalin oder deren Mischungen eingesetzt; besonders bevorzugt wird Styrol eingesetzt.

Als Komponente g₂) kommen alle dem Fachmann bekannten und im Stand der Technik, beispielsweise DE 25 40 517 A1, beschriebenen Vinylcyanide in Betracht; bevorzugt werden Acrylnitril, Methacrylnitril oder deren Mischungen eingesetzt; besonders bevorzugt wird Acrylnitril eingesetzt.

Als Komponente g₃) kommen alle dem Fachmann bekannten und im Stand der Technik beschriebenen Dicarbonsäureanhydride in Betracht; bevorzugt werden Maleinsäureanhydrid, Methylmaleinsäureanhydrid, Itaconsäureanhydrid oder deren Mischungen eingesetzt; besonders bevorzugt wird Maleinsäureanhydrid eingesetzt.

Als Komponente g₄) der erfindungsgemäßen Copolymere G) können weitere, mit den Komponenten g₁), g₂) und g₃) copolymerisierbare und von diesen verschiedene Monomere eingesetzt werden, welche dem Fachmann geläufig sind.

Besonders bevorzugt aufgebaut sind die Copolymeren G) aus Styrol-Acrylnitril-Maleinsäureanhydrid-Copolymeren.

Die Herstellung der Copolymeren G) erfolgt durch Masse- oder Lösungspolymerisation, bevorzugt jedoch als Lösungspolymerisation in Anwesenheit eines organischen Lösungsmittels, beispielsweise Cyclohexan, Ethylbenzol, Toluol oder Dimethylsulfoxid, bevorzugt Ethylbenzol.

Sowohl bei der Lösungs- als auch bei der Massepolymerisation kann die Initiierung der Polymerisationsreaktion grundsätzlich durch Zugabe chemischer Polymerisationsinitiatoren erfolgen, wie beispielsweise in DE 100 58 302 A1 beschrieben; bevorzugt erfolgt die Initiierung aber rein thermisch, also ohne Zusatz eines Polymerisationsinitiators. Die Herstellung kann in einem Batch- oder Semibatch-Verfahren erfolgen, bevorzugt wird jedoch eine kontinuierliche Verfahrensführung durchgeführt.

In einer insbesonders bevorzugten Ausführungsform der erfindungsgemäßen Verfahren erfolgt die Verfahrensführung kontinuierlich unter stationären Bedingungen; unter stationären Bedingungen bedeutet: die Konzentrationen sämtlicher Reaktionsteilnehmer und die Zusammensetzung der gebildeten Copolymere G) bleiben über die Zeitdauer der Reaktion praktisch konstant (Angaben zum Zusammenhang zwischen Monomer- und Polymerzusammensetzung sowie zur stationären Reaktionsführung können insbesondere EP 0 001 625 A1 und DE 25 40 517 A1 entnommen werden).

Geeignete Verfahrensparameter, wie Druck, Temperatur, Verweilzeiten etc., geeignete Apparate zur Durchführung der Verfahren sowie geeignete Mengenstromdosierungen der Monomere, falls vorhanden der Lösungsmittel, falls vorhanden der Initiatoren und ggf. weiterer Polymerisattionszusätze sind dem Fachmann bekannt und im Stand der Technik beschrieben.

Die Aufarbeitung der Polymerisationsmischung und die Isolierung der Copolymere G) kann nach dem Fachmann bekannten und im Stand der Technik beschriebenen Methoden erfolgen, beispielsweise durch Abtrennung niedermolekularer Verbindungen mittels Anlegen von Vakuum oder Strippen mit Inertgas.

Bevorzugte Komponenten G) weisen einen Unterschied des Nitrilgehaltes von weniger als 10 Gew.-% zum Nitrilgehalt der Komponente B) auf.

Als Komponente H) können die erfindungsgemäßen Formmassen 0 bis 60, insbesondere bis zu 50 Gew.- % weiterer Zusatzstoffe enthalten.

Als Komponente H) können auch Ehtylencopolymere, Ethylen-Propylencopolymere, Polyesterelastomere oder thermoplastische Polyurethane eingesetzt werden.

Ganz allgemein handelt es sich dabei um Copolymerisate die bevorzugt aus mindestens zwei. der folgenden Monomeren aufgebaut sind: Ethylen, Propylen, Isobuten, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Als Komponente H) können die erfindungsgemäßen Formmassen 0 bis 5, vorzugsweise 0,05 bis 3 und insbesondere 0,1 bis 2 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt. Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als faser- oder teilchenförmige Füllstoffe H) seien Kohlenstofffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 60 Gew.-%, insbesondere bis zu 50 % eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Mahlglas Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 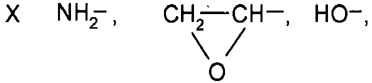
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf H) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein UD (Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Talkum und Kreide genannt.

Als Komponente F können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Als Umesterungsstabilisatoren seien Irgaphos® PEPQ sowie Phosphate (z.B. Monozinkphosphat) genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylenhexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 1 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer weiteren bevorzugten Arbeitsweise können die anderen Komponenten mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Verarbeitung und gute thermische Stabilität bei gleichzeitig guter Mechanik aus. Insbesondere die Verarbeitungsstabilität bei hohen Temperaturen und die Witterungsbeständigkeit ist signifikant verbessert.

Diese eignen sich zur Herstellung von Fasern, Folien und Formkörpem jeglicher Art, insbesondere für Anwendungen als Stecker, Schalter, Gehäuseteile, Gehäusedeckel, Scheinwerferhintergrund (Bezel), Brausenkopf, Armaturen, Bügeleisen, Drehschalter, Herdknöpfe, Friteusehdeckel, Türgriffe, (Rück-)spiegelgehäuse, (Heck-)scheibenwischer, Lichtwellenleiterummantelungen.

Im E/E-Bereich können mit den erfindungsgemäßen Polyestern Stecker, Steckerteile, Steckverbinder, Kabelbaumkomponenten, Schaltungsträger, Schaltungsträgerkomponenten, dreidimensional spritzgegossene Schaltungsträger, elektrische Verbindungselemente, mechatronische Komponenten oder optoelektronische Bauelemente hergestellt werden.

Im Auto-Innenraum ist eine Verwendung für Armaturentafeln, Lenkstockschalter, Sitzteile, Kopfstützen, Mittelkonsolen, Getriebe-Komponenten und Türmodule, im Auto-Außenraum für Türgriffe, Frontscheinwerferkomponenten, Außenspiegelkomponenten, Scheibenwischerkomponenten, Scheibenwischerschutzgehäuse, Ziergitter, Dachreling, Schiebedachrahmen sowie Karosserieaußenteile möglich.

Für den Küchen- und Haushaltsbereich ist der Einsatz der Polyester zur Herstellung von Komponenten für Küchengeräte, wie z.B. Friteusen, Bügeleisen, Knöpfe, sowie Anwendungen im Garten-Freizeitbereich, z.B. Komponenten für Bewässerungssysteme oder Gartengeräte möglich.

### Beispiele

### Komponente A:

Polybutylenterephthalat mit einer Viskositätszahl VZ von 130 ml/g und einem Carboxylendgruppengehalt von 34 mval/kg (Ultradur® B 4500 der BASF SE) (VZ gemessen in 0,5 gew.-%iger Lösung aus Phenol/o-Dichlorbenzol), 1:1-Mischung bei 25°C.

### Komponente B

SAN mit einem AN-Anteil von 19 Gew.% und einer Viskositätszahl vom 70 ml/g (gemessen in DMF, 0,5 gew.-%ige Lösung).

### Komponente C1

### Herstellung des feinteiligen Pfropfmischpolymerisats:

- c1): 16 Teile Butylacrylat und 0,4 Teile Tricyclodecenylacrylat wurden in 150 Teilen Wasser unter Zusatz von einem Teil des Natriumsalzes einer C₁₂- bis C₁₈-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Reaktion wurde innerhalb von 3 Stunden eine Mischung aus 82 Teilen Butylacrylat und 2 Teilen Tricyclodecenylacrylat zugegeben. Danach wurde noch eine Stunde sich selbst überlassen. Der erhaltene Latex hatte einen Feststoffgehalt von 40 Gew.-%. Die mittlere Teilchengröße (Gewichtsmittel) wurde zu 76 nm ermittelt. Die Teilchengrößenverteilung war eng (Quotient Q = 0,29).
- c2): 150 Teile des nach c1) erhaltenen Latex wurden mit 40 Teilen einer Mischung aus Styrol und Acrylnitril (Gewichtsverhältnis 75:25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Sodann wurde mittels Calciumchloridlösung bei 95°C gefällt, mit Wasser gewaschen und im warmen Luftstrom getrocknet. Der Pfropfgrad des Pfropfmischpolymerisats war 35 %.

Der Quellungindex in Toluol betrug: 13,6. (Meßmethode siehe Beschreibung S. 10)

### Komponente C/1V

Die Herstellung erfolgte gemäß Komponente C/1, jedoch mit 5 Teilen Tricyclodecenylacrylat. Der Quellungsindex in Toluol betrug: 4,9

### Komponente D/1

Eine Verbindung der Formel (I), kommerziell vertrieben von BASF SE unter der Bezeichnung Tinuvin® 770.

### D/1V

Eine Verbindung der Formel (VII), kommerziell vertrieben von BASF SE unter der Bezeichnung Tinuvin® 765.

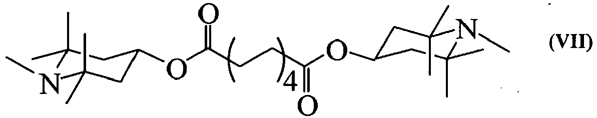

### Komponente E/1

Eine Verbindung der Formel (II), kommerziell vertrieben von Cytec Industries unter der Bezeichnung Cyasorb® 3853.

### Komponente F

### F/1

Ein Gemisch von Verbindungen der Formel (III), kommerziell vertrieben von BASF SE unter der Bezeichnung Chimassorb® 944.

### F/2

Ein Gemisch von Verbindungen der Formel (V), kommerziell vertrieben von Cytec Industries unter der Bezeichnung Cyasorb® UV-3346.

### F/1V

Ein hochmolekulares sterisch gehindertes Amin der Formel (VIII), CAS-Nummer 106990-42-6, kommerziell vertrieben von SABO S.p.A. unter der Bezeichnung Sabostab® 119.

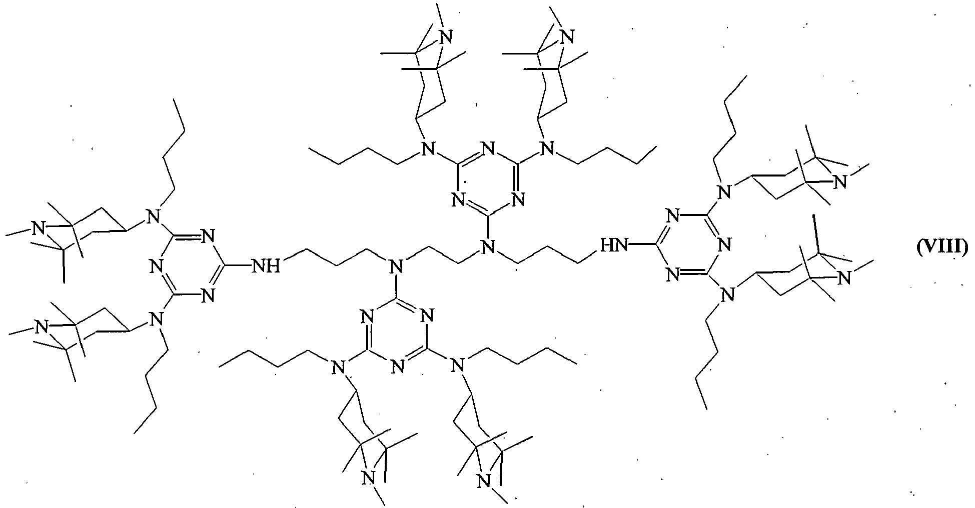

### Komponente G

Als Komponente G wurde ein Styrol-Acrylnitril-Maleinsäureanhydrid-Terpolymer verwendet, welches eine Zusammensetzung von 74,1/23,9/2,0 (Gew.-%) hatte, Viskositätszahl: 67 ml/g. (gemessen in DMF, 0,5 gew.-%ige Lösung)

### Komponente H/1

Glasfasern, die mit einer Epoxy-Schlichte ausgerüstet war, Faserdurchmesser 10 µm.

### Komponente H/2

Ruß: Typ Black Pearls 880, kommerziell vertrieben von Cabot Corporation

### Herstellung und Prüfung der Formmassen

Zum Mischen der Komponenten wurde ein Zweiwellenextruder verwendet. Die Schmelze wurde durch ein Wasserbad geleitet und granuliert.

Des Weiteren wurden die mechanischen Eigenschaften an mittels Spritzguss hergestellten Proben (Massetemperatur: 250°C/Werkzeugtemp. 60°C) bestimmt.

Als ein Maß für die Witterungsbeständigkeit wurde an Prüfkörpern (60x60x2 mm, hergestellt nach ISO 294 in einem Familienwerkzeug (family mould), bei einer Massetemperatur von 250°C und einer Werkzeugtemperatur von 60°C) eine Bewitterung gemäß SAE J 1960 mit einer Prüfdauer von 800 h durchgeführt. Nach den in Tabelle 1 genannten Bewitterungszeiten erfolgte die Beurteilung der Oberflächen anhand einer Grauwertskala (5: keine Veränderung, 1: massive Veränderung), wobei die Proben ohne Nachbehandlung untersucht wurden. Die Schlagzähigkeit der Produkte wurde an ISO-Stäben nach ISO 179 1eU bestimmt. Reißfestigkeit und Reißdehnung wurden nach ISO 527 bestimmt. Zur Beurteilung der Verarbeitungsstabilität wurden die Formmassen auch bei 300°C Massetemperatur/60°C Werkzeugtemperatur verarbeitet.

Die Zusammensetzung der verwendeten Styrolcopolmyere wurde durch quantitative IR-Spektroskopie ermittelt.

Die Zusammensetzungen der Formmassen und die Ergebnisse der Prüfungen sind in Tabelle 1 aufgeführt.

**Tabelle 1:**

| Formmasse Nr. | V1 | 2 | 3 | 4 | 5 | V6 | V7 | V8 |
|---|---|---|---|---|---|---|---|---|
| Komponenten [Gew.-%] | | | | | | | | |
| A | 57,9 | 57,1 | 57,1 | 57,1 | 57,1 | 57,1 | 57,1 | 57,1 |
| B | 10,6 | 10,5 | 10,5 | 10,5 | 6,5 | 10,5 | 10,5 | 10,6 |
| C/1 | 11,0 | 10,9 | 10,9 | 10,9 | 10,9 | - | 10,9 | 11,0 |
| C/1V | | | | | | 10,9 | | |
| D1 | - | 0,5 | 0,5 | 0,5 | 0,5 | 0,5 | - | 0,5 |
| D/1V | - | - | - | - | - | - | 0,5 | - |
| E/1 | - | 0,5 | 0,25 | 0,25 | 0,5 | 0,5 | 0,5 | - |
| F/1 | - | - | 0,25 | - | - | - | - | - |
| F/2 | - | - | - | 0,25 | - | - | - | - |
| F1V | - | - | - | - | - | - | - | 0,3 |
| G | - | - | - | - | 4 | - | - | - |
| H/1 | 20 | 20 | 20 | 20 | 20 | 20 | 20 | 20 |
| H/2 | 0,5 | 0,5 | 0,5 | 0,5 | 0,5 | 0,5 | 0,5 | 0,5 |
| aₙ [kJ/m²] | 54,1 | 53,5 | 53,9 | 53,7 | 62,7 | 53,5 | 53,7 | 52,4 |
| Reißfestigkeit [N/mm²] | 104 | 103 | 104 | 104 | 115 | 103 | 104 | 102 |
| Reißdehnung [%] | 2,7 | 2,7 | 2,7 | 2,6 | 3,0 | 2,6 | 2,6 | 2,6 |
| aₙ Verarbeitung bei 300°C/60°C [kJ/m²] | 42,3 | 46,4 | 47,4 | 46,7 | 57,7 | 46,4 | 46,3 | 46,4 |
| Grauwert nach 800 h | 1,0 | 3,0 | 3,5 | 3,0 | 2,5 | 1,5 | 1,0 | 1,5 |

## Patentansprüche

1. Thermoplastische Formmassen, enthaltend
A) 2 bis 98,8 Gew.-% mindestens eines Polyesters,
B) 0 bis 49,9 Gew.-% eines kautschukfreien Copolymerisates, verschieden von C)
und/oder G) aus,
b₁) 160 bis 95 Gew.-% Styrol oder substituierten Styrolen der allgemeinen Formel Ia oder
deren Mischungen 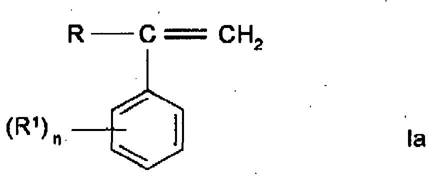 worin R einen Alkylrest mit 1 bis 8 C-Atomen oder ein Wasserstoffatom und R¹ einen Alkylrest mit 1 bis 8 C-Atomen darstellen und n den Wert 1, 2 oder 3 hat und
b₂) 5 bis 40 Gew.-% mindestens eines ungesättigten Nitrils,
C) 1 bis 49,9 Gew.-% eines oder mehrerer schlagzähmodifizierter Pfropfkautschuke ohne olefinische Doppelbindung in der Kautschukphase und mit einem Quellungsindex von 6 bis 60 (in Toluol), gemessen nach der in der Beschreibung angegebenen Methode.
D) 0,1 bis 1 Gew.-% einer Verbindung der Formel (I) 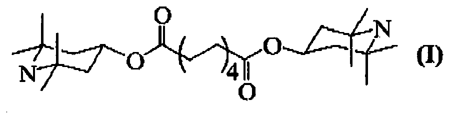
E) 0,1 bis 1 Gew.-% eines Gemisches von Verbindungen der Formel (II) 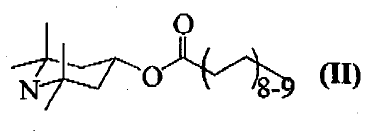
F) 0 bis 1 Gew.-% eines Gemisches von Verbindungen der Formel (III) 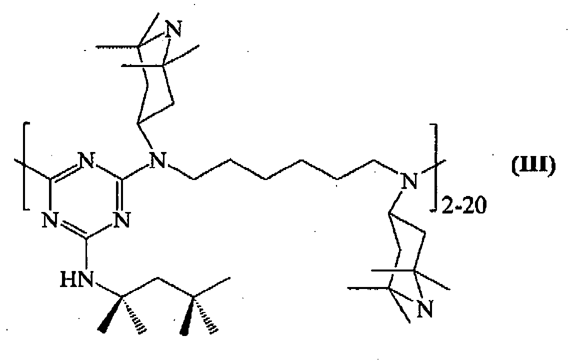 oder 0 bis 1 Gew.-% eines Gemisches von Verbindungen der Formel (IV) 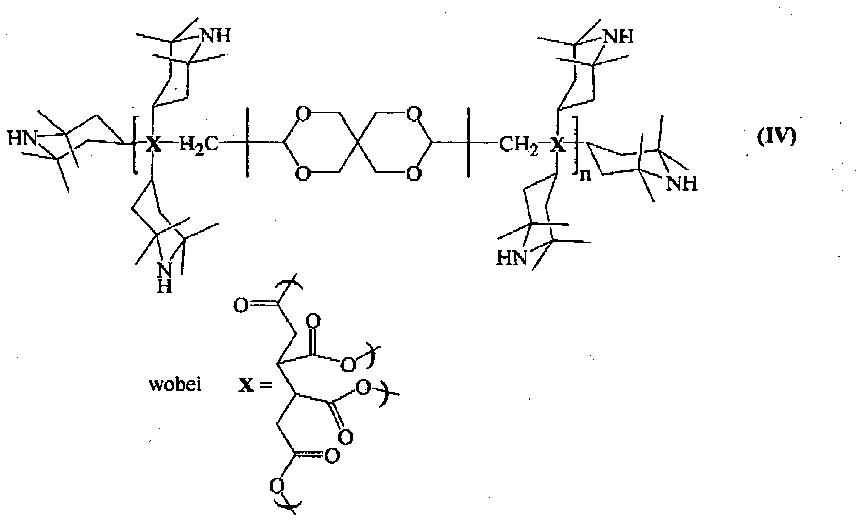 n = 2 bis 20
oder 0 bis 1 Gew.-% eines Gemisches von Verbindungen der Formel (V): 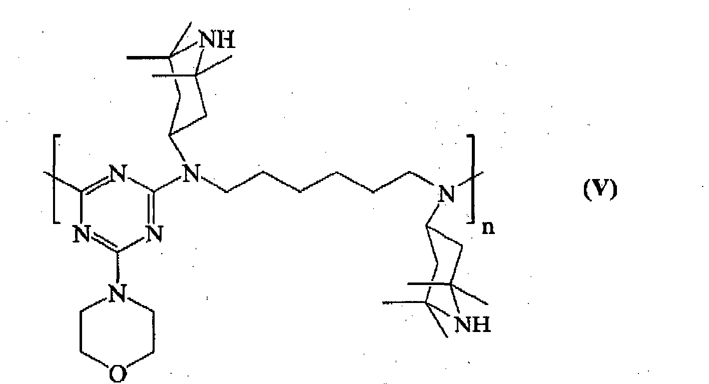 n = 2 bis 20
oder 0 bis 1 Gew.-% eines Gemisches von Verbindungen der Formel (VI) 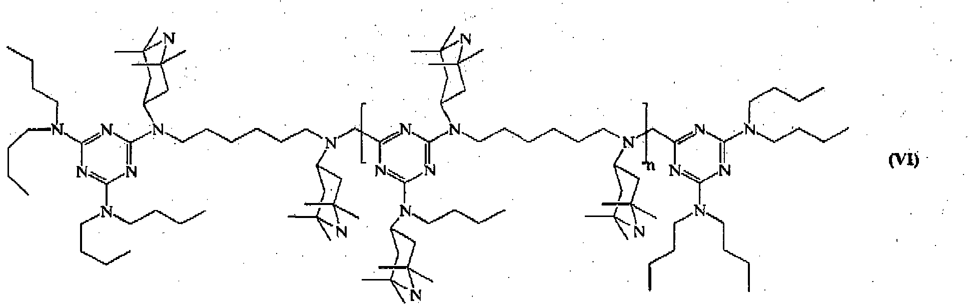 n = 2 bis 20
oder deren Mischungen,
G) 0 bis 30 Gew.-% eines Copolymeren aus
g₁) 49,5 bis 99,5 Gew.-% sich von einem oder mehreren vinylaromatischen Monomeren
ableitende Struktureinheiten,
g₂) 0 bis 50 Gew.-% sich von einem oder mehreren Vinylcyaniden ableitende Struktureinheiten,
g₃) 0,5 bis 40 Gew.-% sich von einem oder mehreren Dicarbonsäureanhydriden ableitende Struktureinheiten und
g₄) 0 bis 25 Gew.-% sich von weiteren copolymerisierbaren Monomeren ableitende
Struktureinheiten,
wobei die Gew.-% der Komponente G) jeweils auf das Gesamtgewicht der sich von den Komponenten g₁, g₂, g₃ und g₄ ableitenden Struktureinheiten bezogen sind und zusammen 100 Gew.% ergeben,
H) 0 bis 60 Gew.-% weiterer Zusatzstoffe.
wobei die Summe der Gewichtsprozente A) bis H) 100 % ergibt.

2. Thermoplastische Formmassen nach Anspruch 1 enthaltend
A) 20 bis 97 Gew.-%
B) 1 bis 49,9 Gew.-%
C) 1 bis 40 Gew.-%
D) 0,2 bis 0,9 Gew.-%
E) 0,2 bis 0,9 Gew.-%
F) 0 bis 1 Gew.-%
G) 0 bis 30 Gew.-%
H) 0 bis 50 Gew.-%
wobei A) bis H) 100 % ergibt.

3. Thermoplastische Formmassen nach den Ansprüchen 1 oder 2, enthaltend
A) 20 bis 97 Gew.-%
B) 1 bis 49,9 Gew.-%
C) 1 bis 40 Gew.%
D) 0,2 bis 0,9 Gew.-%
E) 0,2 bis 0,9 Gew.-%
F) 0,1 bis 0,5 Gew.-%
G) 0 bis 30 Gew-%
H) 0 bis 50 Gew.-%
wobei A) bis H) 100 % ergibt.

4. Thermoplastische Formmassen nach den Ansprüchen 1 bis 3, enthaltend
A) 20 bis 97 Gew.-%
B) 1 bis 49,9 Gew.-%
C) 1 bis 40 Gew.-%
D) 0,2 bis 0,9 Gew.-%
E) 0,2 bis 0,9 Gew.-%
F) 0,1 bis 0,5 Gew.-%
G) 0,5 bis 20 Gew.-%
H) 0 bis 50 Gew.-%
wobei A) bis H) 100 % ergibt.

5. Thermoplastische Formmassen nach den Ansprüchen 1 bis 4, enthaltend als Komponente C) ein Pfropfpolymerisat aufgebaut aus
C₁) 40 bis 80 Gew.-% einer Pfropfgrundlage aus einem kautschukelastischen Polymeren auf Basis von Alkylacrylaten mit 1 bis 8 C-Atomen im Alkylrest und mit einer Glasübergangstemperatur von unter 10°C,
C₂) 20 bis 60 Gew.-% einer Pfropfauflage aus
C₂₁) 60 bis 85 Gew.-% Styrol oder substituierten Styrolen der allgemeinen Forme 1a oder deren Mischungen,
C₂₂) 15 bis 35 Gew.-% mindestens eines ungesättigten Nitrils.

6. Thermoplastische Formmassen nach den Ansprüchen 1 bis 5, enthaltend als Komponente G) ein Terpolymerisat aus
Komponente g₁) Styrol, α-Methylstyrol, p-Methylstyrol, t-Butylstyrol, Vinylnaphthalin oder ein Gemisch aus zwei oder mehr dieser Monomeren,
Komponente g₂) Acrylnitril, Methacrylnitril oder ein Gemisch dieser Monomeren und Komponente g₃) Maleinsäureanhydrid. Methylmaleinsäureanhydrid, Itaconsäureanhydrid oder ein Gemisch aus zwei oder mehr dieser Monomeren.

7. Verwendung der thermoplastischen Formmassen gemäß den Ansprüchen 1 bis 6 zur Herstellung von Fasern, Folien und Formkörpern jeglicher Art.

8. Formkörper jeglicher Art, Fasern und Folien erhältlich aus den thermoplastischen Formmassen gemäß den Ansprüchen 1 bis 6.

## Claims

1. A thermoplastic molding composition comprising
A) from 2 to 98.8% by weight of at least one polyester,
B) from 0 to 49.9% by weight of a rubber-free
copolymer different from C) and/or G) made of
b₁) from 60 to 95% by weight of styrene or of
substituted styrenes of the general formula Ia or a mixture of these 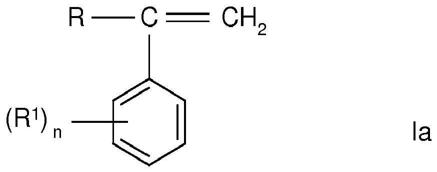 in which R is an alkyl radical having from 1 to 8 carbon atoms or a hydrogen atom, and R¹ is an alkyl radical having from 1 to 8 carbon atoms, and n has the value 1, 2, or 3, and
b₂) from 5 to 40% by weight of at least one
unsaturated nitrile,
C) from 1 to 49.9% by weight of one or more impact-modified graft rubbers having no olefinic double bond in the rubber phase and having a swelling index of from 6 to 60 (in toluene), measured in accordance with the method stated in the description,
D) from 0.1 to 1% by weight of a compound of the formula (I) 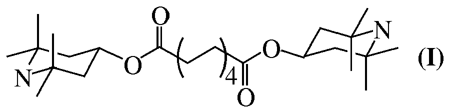
E) from 0.1 to 1% by weight of a mixture of
compounds of the formula (II) 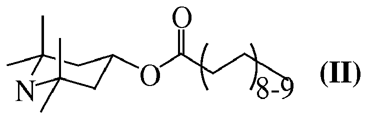
F) from 0 to 1% by weight of a mixture of
compounds of the formula (III) 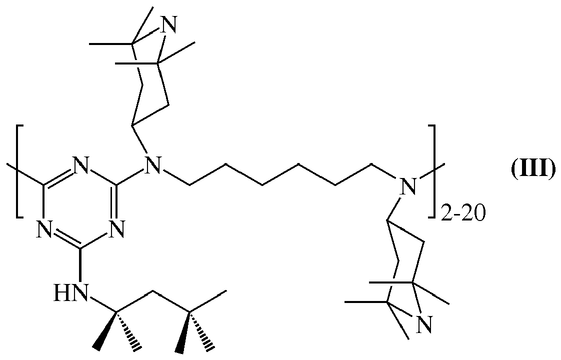 or from 0 to 1% by weight of a mixture of compounds of the formula (IV) 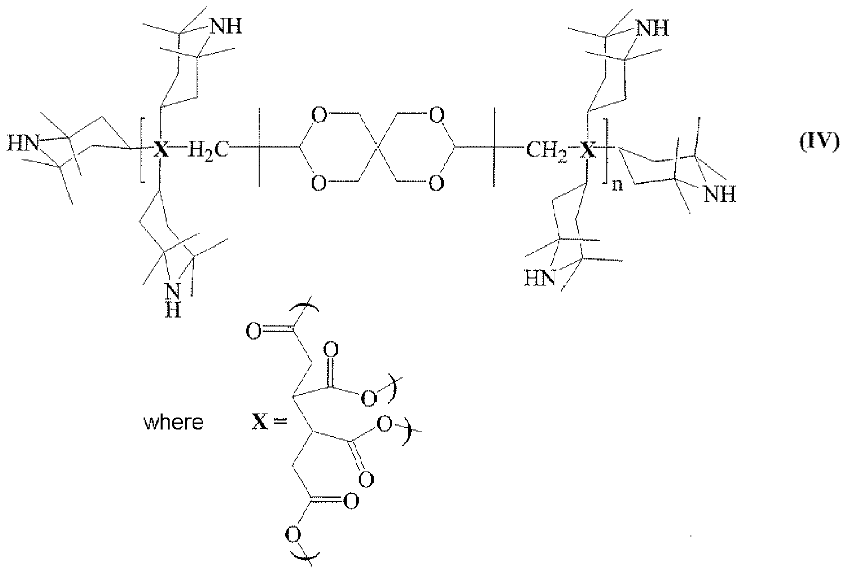 n = from 2 to 20
or from 0 to 1% by weight of a mixture of compounds of the formula (V): 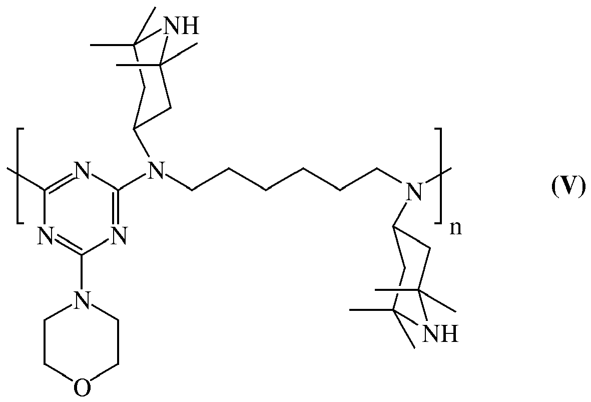 n = from 2 to 20
or from 0 to 1% by weight of a mixture of compounds of the formula (VI) 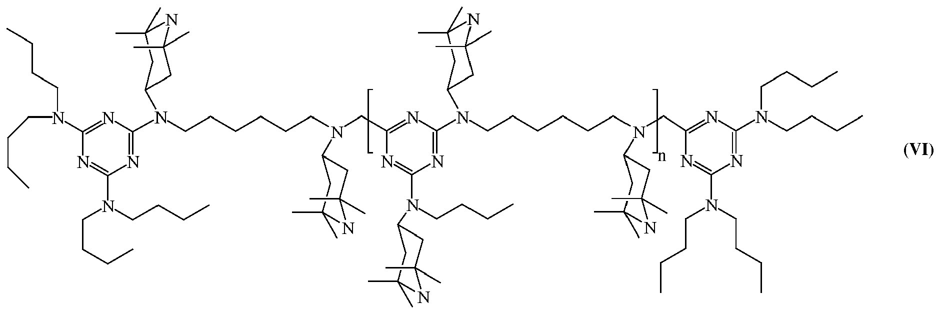 n = from 2 to 20
or a mixture of these,
G) from 0 to 30% by weight of a copolymer made of g₁) from 49.5 to 99.5% by weight of structural units
deriving from one or more vinylaromatic monomers,
g₂) from 0 to 50% by weight of structural units
deriving from one or more vinyl cyanides,
g₃) from 0.5 to 40% by weight of structural units
deriving from one or more dicarboxylic anhydrides, and
g₄) from 0 to 25% by weight of structural units
deriving from other copolymerizable monomers, where each of the % by weight values for component G) is based on the total weight of the structural units deriving from components g₁, g₂, g₃, and g₄, and the total of these values is 100% by weight, and
H) from 0 to 60% by weight of other additives, where the total of the percentages by weight of A)
to H) gives 100%.

2. The thermoplastic molding composition according to claim 1, comprising
A) from 20 to 97% by weight
B) from 1 to 49.9% by weight
C) from 1 to 40% by weight
D) from 0.2 to 0.9% by weight
E) from 0.2 to 0.9% by weight
F) from 0 to 1% by weight
G) from 0 to 30% by weight
H) from 0 to 50% by weight where A) to H) gives 100%.

3. The thermoplastic molding composition according to claim 1 or 2, comprising
A) from 20 to 97% by weight
B) from 1 to 49.9% by weight
C) from 1 to 40% by weight
D) from 0.2 to 0.9% by weight
E) from 0.2 to 0.9% by weight
F) from 0.1 to 0.5% by weight
G) from 0 to 30% by weight
H) from 0 to 50% by weight where A) to H) gives 100%.

4. The thermoplastic molding composition according to claims 1 to 3, comprising
A) from 20 to 97% by weight
B) from 1 to 49.9% by weight
C) from 1 to 40% by weight
D) from 0.2 to 0.9% by weight
E) from 0.2 to 0.9% by weight
F) from 0.1 to 0.5% by weight
G) from 0.5 to 20% by weight
H) from 0 to 50% by weight
where A) to H) gives 100%.

5. The thermoplastic molding composition according to claims 1 to 4, comprising, as component C), a graft polymer composed of
C₁) from 40 to 80% by weight of a graft base made of
an elastomeric polymer based on alkyl acrylates having 1 to 8 carbon atoms in the alkyl radical and with glass transition temperature below 10°C,
C₂) from 20 to 60% by weight of a graft made of
C₂₁) from 60 to 85% by weight of styrene or of
substituted styrenes of the general formula Ia or a mixture of these,
C₂₂) from 15 to 35% by weight of at least one
unsaturated nitrile.

6. The thermoplastic molding composition according to claims 1 to 5, comprising, as component G), a terpolymer made of
component g₁): styrene, α-methylstyrene, p-methylstyrene, tert-butylstyrene, vinylnaphthalene, or a mixture made of two or more of these monomers, component g₂) : acrylonitrile, methacrylonitrile, or
a mixture of these monomers, and
component g₃) : maleic anhydride, methylmaleic anhydride, itaconic anhydride, or a mixture made of two or more of these monomers.

7. The use of the thermoplastic molding compositions according to claims 1 to 6 for producing fibers, foils, and moldings of any type.

8. A molding of any type, a fiber, or a foil obtainable from the thermoplastic molding compositions according to claims 1 to 6.

## Revendications

1. Matières à mouler thermoplastiques, contenant
A) 2 à 98,8 % en poids d'au moins un polyester,
B) 0 à 49,9 % en poids d'un copolymère sans caoutchouc, différent de C) et/ou G, constitué par
b₁) 60 à 95 % en poids de styrène ou de styrènes
substitués de formule générale Ia ou leurs mélanges 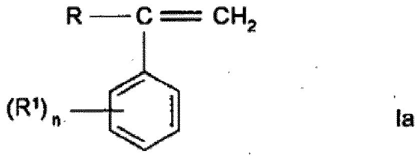 dans laquelle R représente un radical alkyle de 1 à 8 atomes C ou un atome d'hydrogène et R¹ représente un radical alkyle de 1 à 8 atomes C et n a la valeur 1, 2 ou 3, et
b₂) 5 à 40 % en poids d'au moins un nitrile insaturé,
C) 1 à 49,9 % en poids d'un ou de plusieurs caoutchoucs greffés à résistance aux impacts modifiée sans double liaison oléfinique dans la phase caoutchouc et présentant un indice de gonflement de 6 à 60 (dans le toluène), mesuré selon la méthode indiquée dans la description,
D) 0,1 à 1 % en poids d'un composé de formule (I) 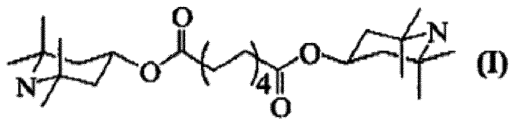
E) 0,1 à 1 % en poids d'un mélange de composés de
formule (II) 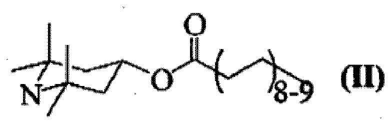
F) 0 à 1 % en poids d'un mélange de composés de
formule (III) 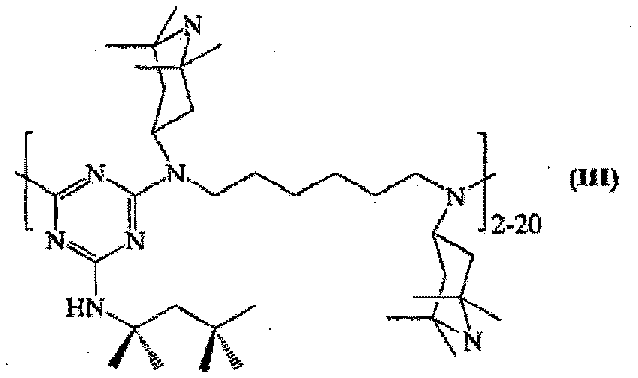 ou 0 à 1 % en poids d'un mélange de composés de formule (IV) 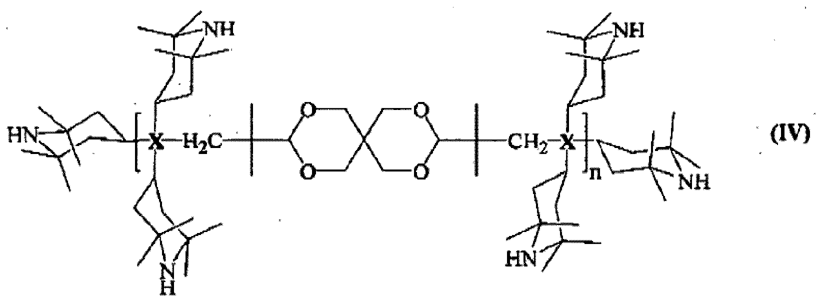 avec 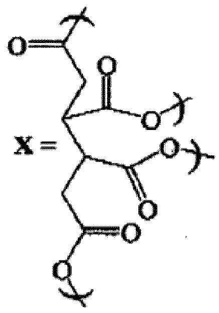 n = 2 à 20,
ou 0 à 1 % en poids d'un mélange de composés de formule (V) 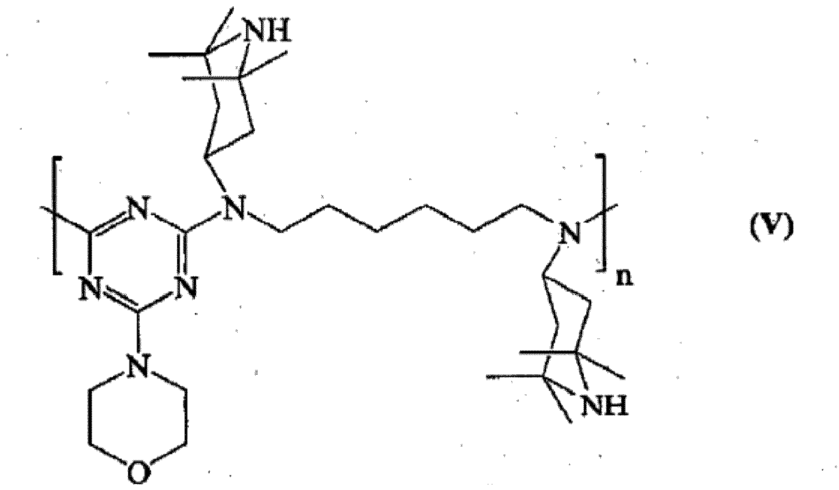 n = 2 à 20,
ou 0 à 1 % en poids d'un mélange de composés de formule (VI) 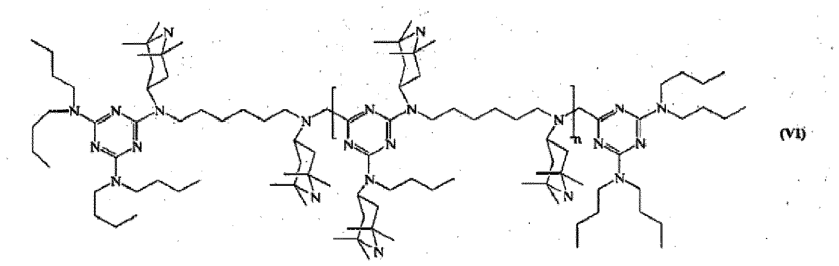 n = 2 à 20,
ou leurs mélanges,
G) 0 à 30 % en poids d'un copolymère de
g₁) 49,5 à 99,5 % en poids d'unités structurales dérivant d'un ou de plusieurs monomères aromatiques de vinyle,
g₂) 0 à 50 % en poids d'unités structurales dérivant d'un ou de plusieurs cyanures de vinyle,
g₃) 0,5 à 40 % en poids d'unités structurales dérivant d'un ou de plusieurs anhydrides d'acides dicarboxyliques, et
g₄) 0 à 25 % en poids d'unités structurales dérivant d'autres monomères copolymérisables,
les % en poids du composant G) se rapportant à chaque fois au poids total des unités structurales dérivant des composants g₁, g₂, g₃ et g₄, et leur somme étant de 100 % en poids,
H) 0 à 60 % en poids d'autres additifs,
la somme des pourcentages en poids de A) à H) étant de 100 %.

2. Matières à mouler thermoplastiques selon la revendication 1, contenant
A) 20 à 97 % en poids,
B) 1 à 49,9 % en poids,
C) 1 à 40 % en poids,
D) 0,2 à 0,9 % en poids,
E) 0,2 à 0,9 % en poids,
F) 0 à 1 % en poids,
G) 0 à 30 % en poids,
H) 0 à 50 % en poids,
la somme de A) à H) étant de 100 %.

3. Matières à mouler thermoplastiques selon les revendications 1 ou 2, contenant
A) 20 à 97 % en poids,
B) 1 à 49,9 % en poids,
C) 1 à 40 % en poids,
D) 0,2 à 0,9 % en poids,
E) 0,2 à 0,9 % en poids,
F) 0,1 à 0,5 % en poids,
G) 0 à 30 % en poids,
H) 0 à 50 % en poids,
la somme de A) à H) étant de 100 %.

4. Matières à mouler thermoplastiques selon les revendications 1 à 3, contenant
A) 20 à 97 % en poids,
B) 1 à 49,9 % en poids,
C) 1 à 40 % en poids,
D) 0,2 à 0,9 % en poids,
E) 0,2 à 0,9 % en poids,
F) 0,1 à 0,5 % en poids,
G) 0,5 à 20 % en poids,
H) 0 à 50 % en poids,
la somme de A) à H) étant de 100 %.

5. Matières à mouler thermoplastiques selon les revendications 1 à 4, contenant en tant que composant C) un polymère greffé constitué par
C₁) 40 à 80 % en poids d'une base de greffage en un polymère élastique de caoutchouc à base d'acrylates d'alkyle de 1 à 8 atomes C dans le radical alkyle et présentant une température de transition vitreuse inférieure à 10 °C,
C₂) 20 à 60 % en poids d'un revêtement de greffage constitué par
C₂₁) 60 à 85 % en poids de styrène ou de styrènes substitués de formule générale Ia ou leurs mélanges, C₂₂) 15 à 35 % en poids d'au moins un nitrile insaturé.

6. Matières à mouler thermoplastiques selon les revendications 1 à 5, contenant en tant que composant G) un terpolymère constitué par
composant g₁) : styrène, α-méthylstyrène, p-méthylstyrène, t-butylstyrène, vinylnaphtaline ou un mélange de deux ou plus de ces monomères,
composant g₂) : acrylonitrile, méthacrylonitrile ou un mélange de ces monomères, et
composant g₃) : anhydride de l'acide maléique, anhydride de l'acide méthylmaléique, anhydride de l'acide itaconique ou un mélange de deux ou plus de ces monomères.

7. Utilisation des matières à mouler thermoplastiques selon les revendications 1 à 6 pour la fabrication de fibres, de films et de corps moulés de tout type.

8. Corps moulés de tout type, fibres et films, pouvant être obtenus à partir des matières à mouler thermoplastiques selon les revendications 1 à 6.
